(19) Europäisches Patentamt
European Patent Office
Office européen des brevets

(11) EP 3 163 773 A1

(12) EUROPEAN PATENT APPLICATION

(43) Date of publication:
03.05.2017 Bulletin 2017/18

(51) Int Cl.:
*H04B 10/69* (2013.01)

(21) Application number: 16196225.3

(22) Date of filing: 28.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.10.2015 US 201514925468

(71) Applicant: Ranovus Inc.
Ottawa, Ontario K2H 8R6 (CA)

(72) Inventors:
• CAO, Bin
  Kanata, Ontario K2M 2X9 (CA)
• LOGAN, Dylan
  Ottawa, Ontario K1H 7R1 (CA)

(74) Representative: Creek, Isobel Clare
The IP Asset Partnership Limited
Prama House
267 Banbury Road
Oxford OX2 7HT (GB)

(54) AN AVALANCHE PHOTODIODE IN A PHOTONIC INTEGRATED CIRCUIT WITH A WAVEGUIDE OPTICAL SAMPLING DEVICE

(57) An avalanche photodiode in a photonic integrated circuit with a waveguide optical sampling device is provided. Specifically, disclosed herein is a device which includes: an avalanche photodiode (APD) comprising a light input, an electrical output and a gain control input; a waveguide configured to convey on optical signal to the light input of the APD; an optical sampling device on the waveguide configured to sample an input light level of the optical signal, the waveguide and at least a portion of the optical sampling device formed from a photonic integrated circuit (PIC); and, a controller in communication with the optical sampling device and the gain control input, the controller configured to control a bias voltage to the gain control input of the APD based on the input light level of the optical signal received at the optical sampling device.

Fig. 1

Printed by Jouve, 75001 PARIS (FR)

EP 3 163 773 A1

## Description

The specification relates generally to telecommunication devices, and specifically to an avalanche photodiode in a photonic integrated circuit with a waveguide optical sampling device.

## BACKGROUND

Avalanche photodiode (APD) receivers require avalanche gain control for lower noise and thus better sensitivity. Traditional APD gain control usually requires lengthy factory calibration routines to define control parameters for power estimation to enable gain control. However, such approaches add significant cost and manufacturing complexity.

## SUMMARY

The present specification provides an avalanche photodiode (APD) in a photonic integrated circuit in which a waveguide that conveys light to the APD includes an integrated optical sampling device in the photonic integrated circuit. Output at the integrated optical sampling device is monitored by a controller which controls the gain of the APD accordingly. Restrictions can be placed on the maximum gain and/or minimum gain based, for example, on temperature of the APD and/or factory settings. Hence, in some implementations, the controller is in communication with a temperature measurement device that measures the temperature of the APD, and at least the maximum bias voltage to the APD that sets the maximum gain can be determined accordingly.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

Furthermore, as will become apparent, in this specification certain elements may be described as connected physically, electronically, or any combination thereof, according to context. In general, components that are electrically connected are configured to communicate (that is, they are capable of communicating) by way of electric signals. According to context, two components that are physically coupled and/or physically connected may behave as a single element. In some cases, physically connected elements may be integrally formed, e.g., part of a single-piece article that may share structures and materials. In other cases, physically connected elements may comprise discrete components that may be fastened together in any fashion. Physical connections may also include a combination of discrete components fastened together, and components fashioned as a single piece.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one ..." and "one or more..." language.

An aspect of the specification provides a device comprising: an avalanche photodiode (APD) comprising a light input, an electrical output and a gain control input; a waveguide configured to convey on optical signal to the light input of the APD; an optical sampling device on the waveguide configured to sample an input light level of the optical signal, the waveguide and at least a portion of the optical sampling device formed from a photonic integrated circuit (PIC); and, a controller in communication with the optical sampling device and the gain control input, the controller configured to control a bias voltage to the gain control input of the APD based on the input light level of the optical signal received at the optical sampling device.

The controller can be further configured to: increase the bias voltage when the input light level decreases; and decrease the bias voltage when the input light level increases.

The controller can be further configured to limit the bias voltage to a maximum bias voltage and a minimum bias voltage.

The device can further comprise one or more of a temperature control device and a temperature measurement device located to one or more of control a temperature of the APD and determine a temperature of the APD, the controller further configured to: determine a maximum bias voltage based on the temperature; and limit the bias voltage to the maximum bias voltage.

The controller, the APD, the waveguide and the optical sampling device can be formed on a silicon chip, and the PIC can comprise a silicon PIC.

The optical sampling device can comprise a photodiode configured to receive a portion of the optical signal on the waveguide and, in response, produce an electrical signal related to the input light level of the optical signal; the controller can be communication with the photodiode, and the controller can be further configured to control the bias voltage based on the electrical signal received from the photodiode.

The optical sampling device can comprise an in-line photodiode integrated directly onto the waveguide, the photodiode configured to sample the input light level of the optical signal by absorbing a fraction of the optical signal and transmitting a remainder of the optical signal to the APD.

The device can further comprise a memory storing one or more of a response curve and a response table, wherein the controller can be further configured to control the bias voltage to the gain control input of the APD based on one or more of the response curve and the response table.

The device can further comprise a light input to the waveguide, the light input configured to receive the optical signal from an external source. The external source can comprise an optical fiber.

The APD can be further configured to change an electrical current at the electrical output based on the bias voltage.

The device can further comprise an electrical circuit in communication with the electrical output of the APD. The electrical circuit can be configured to convert electrical signals received from the electrical output into data.

The device can further comprise an optical telecommunications receiver.

The device can further comprise a polarization diverse receiver, one or more paths of the polarization diverse receiver comprising the waveguide.

## BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a schematic diagram of a device that includes an avalanche photodiode in a photonic integrated circuit with a waveguide optical sampling device, according to non-limiting implementations.

Fig. 2 depicts a schematic block diagram of flowchart of a method of controlling bias voltage of an avalanche photodiode in a photonic integrated circuit with a waveguide optical sampling device, according to non-limiting implementations.

Fig. 3 depicts a schematic diagram of a device that includes an avalanche photodiode in a photonic integrated circuit with a waveguide optical sampling device that includes an in-line semi-absorbing photodiode, according to alternative non-limiting implementations.

Fig. 4 depicts a schematic diagram of a device that includes an avalanche photodiode in a photonic integrated circuit with a waveguide optical sampling device and a polarization diverse receiver, according to alternative non-limiting implementations.

Fig. 5 depicts a schematic diagram of a device that includes an avalanche photodiode with two optical inputs in a photonic integrated circuit with a waveguide optical sampling device and a polarization diverse receiver and two waveguides that convey optical signals from the polarization diverse receiver to the two optical inputs of the avalanche photodiode, according to alternative non-limiting implementations.

## DETAILED DESCRIPTION

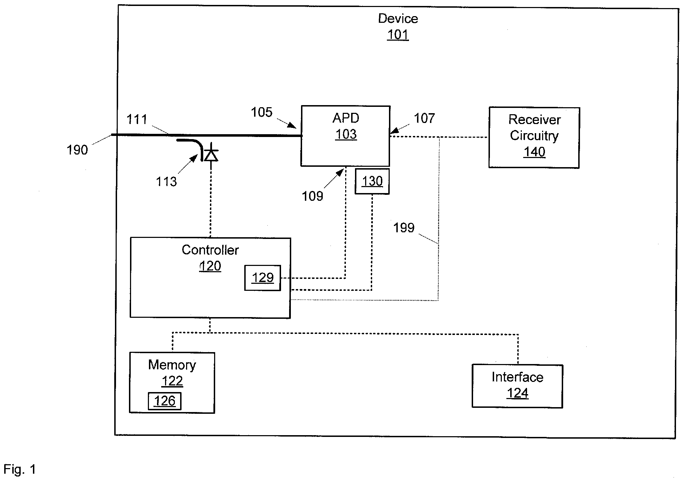

Fig. 1 schematically depicts a device 101 comprising: an avalanche photodiode (APD) 103 comprising a light input 105, an electrical output 107 and a gain control input 109; a waveguide 111 configured to convey on optical signal to light input 105 of APD 103; an optical sampling device 113 on waveguide 111 configured to sample an input light level of the optical signal, waveguide 111 and at least a portion of optical sampling device 113 formed from a photonic integrated circuit (PIC); and, a controller 120 in communication with optical sampling device 113 and gain control input 109, controller 120 configured to control a bias voltage to gain control input 109 of APD 103 based on the input light level of the optical signal received at optical sampling device 113. As depicted, device 101 further comprises a memory 122 and an interface 124 each interconnected with controller 120. In particular, memory 122 stores an application 126, which, when processed by controller 120, enables controller to control the bias voltage. As depicted, controller 120 further comprises a voltage device 129 in communication with gain control input 109 of APD 103, controller 120 configured to control voltage device 129 to output a bias voltage to gain control input 109. As depicted, device 101 further comprises an optional temperature measurement device and/or temperature control device and/or thermoelectric cooler 130 (referred to hereafter as TEC 130) and optional receiver circuitry 140 (interchangeably referred to as circuitry 140), described in more detail below.

For example, device 101 can generally comprise a receiver in an optical telecommunications system (e.g. an optical telecommunications receiver) configured to receive a modulated optical signal at a given optical frequency (and a given data rate), the modulated optical signal having data encoded therein. As such, the given frequency optical frequency can comprise a given carrier optical frequency including, but not limited to, an optical frequency used in optical telecommunications in a range of about 184.5-238 THz; however other optical frequencies are within the scope of present implementations.

Furthermore, APD 103 can receive the modulated optical signal via waveguide 111, and convert the modulated optical signal to a modulated electrical signal, which is output at electrical output 107, and received by circuitry 140, for conversion to data (e.g. webpages, movies, television, radio, music, etc.).

An avalanche photodiode is particular type of photodiode that comprises highly a sensitive semiconductor electronic device that exploits the photoelectric effect to convert light to electricity, that includes a first stage of gain that occurs through avalanche multiplication, and the gain can be controlled by applying a bias voltage. Such avalanche photodiodes are used in optical telecommunication receivers to convert modulated optical signals (e.g. light) encoded with data digitally encoded with "1"s and "0"s to a corresponding digital electrical signal. APD 103 hence comprises such a photodiode. Furthermore, each of a light input 105, electrical output 107 and gain control input 109 comprises an input or output that is integrated into APD 103, as well as in communication with suitable internal components of APD 103. Furthermore, at least light input 105 of APD 103 can be integrated with the PIC of waveguide 111, and each of electrical output 107 and gain control input 109 can be integrated into a silicon based chip, and the like, that can also include controller 120. Furthermore, each of electrical output 107 and gain control input 109 can comprise electrical pins of APD 103 connected to internal electrical components of APD 103.

While not depicted, device 101 can be further configured to optically interface with an optical fiber (e.g. at an input 190 to waveguide 111), and device 101 can hence receive the modulated optical signal through the optical fiber, which can be hundreds of kilometers long (or more). Device 101 can hence comprise a modulating optical signal receiver, which can include one or more interfaces (such as interface 124) to data receiving devices, including, but not limited to, servers, personal computers, laptops, mobile devices and the like.

While not depicted, device 101 can comprise a plurality of APDs and a plurality of waveguides in one-to-one relationship, each of the APDs configured to which is dedicated to receiving optical signals on different frequencies; hence, in these implementations, device 101 further comprises one or more of: a plurality of inputs (similar to input 190) which receive a respective optical fiber carrying an optical signal of a respective frequency; and one or more optical filter devices configured to separate the optical signals of different frequencies and convey respective optical signals to a respective waveguide and respective APD. In these implementations, device 101 can comprise a plurality of receiver circuits similar to receiver circuitry 140, and/or receiver circuitry 140 can be configured to process a plurality of electrical signals from a plurality of APDs.

Hence, it should be emphasized that the structure of device 101 in Fig. 1 is purely an example, and contemplates a device that can be used for optical data communications. In particular, at least waveguide 111 and the optical signal conveying portion of optical sampling device 113 are formed from a photonic integrated circuit (PIC); indeed, any components of device 101 that convey and/or interact with optical signals can be formed from a PIC. In particular non-limiting implementations, components of device 101 that convey and/or interact with optical signals can be formed from a silicon based PIC, however other materials are within the scope of present implementations.

For clarity, in Fig. 1 and through-out the present specification, solid lines connecting components depict links and/or waveguides that include flow of optical signals there between, while dashed lines connecting components depict links that include flow electrical data and/or electrical signals there between.

Controller 120 can comprise a processor and/or a plurality of processors, including but not limited to one or more central processors (CPUs) and/or one or more processing units; either way, controller 120 comprises a hardware element and/or a hardware processor. Indeed, in some implementations, controller 120 can comprise an ASIC (application-specific integrated circuit) and/or an FPGA (field-programmable gate array) specifically configured to implement the functionality of controller 120. Hence, controller 120 is not necessarily a generic computing device and/or a generic processor and/or a generic component of computing controller 120, but a device specifically configured to implement specific functionality; such specific functionality includes controlling a bias voltage to APD 103 based on output from optical sampling device 113 described in further detail below. For example, controller 120 can specifically comprise an engine configured to control a bias voltage to APD 103.

Memory 122 can comprise a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of controller 120 and/or device 101 as described herein are typically maintained, persistently, in memory 122 and used by controller 120 which makes appropriate utilization of volatile storage during the execution of such programming instructions. Those skilled in the art recognize that memory 122 is an example of computer readable media that can store programming instructions executable on controller 120. Furthermore, memory 122 is also an example of a memory unit and/or memory module and/or a non-volatile memory.

In particular, memory 122 stores application 126 that when processed by controller 120 enables controller to: to control a bias voltage to gain control input 109 of APD 103 based on the input light level of the optical signal received at optical sampling device 113.

Interface 124 can comprise any wired and/or wireless interface configured to receive data used to modulate optical signals. As such, interface 124 is configured to correspond with communication architecture that is used to implement one or more communication links used to receive data, including but not limited to any suitable combination of, cables, serial cables, USB (universal serial bus) cables, and wireless links (including, but not limited to, WLAN (wireless local area network) links, WiFi links, WiMax links, cell-phone links, Bluetooth™ links, NFC (near field communication) links, packet based links, the Internet, analog networks, access points, and the like, and/or a combination). However, interface 124 is generally non-limiting and any interface used in optical telecommunication devices and/or optical telecommunication receivers is within the scope of present implementations.

Voltage device 129 can comprise a device that outputs a bias voltage to gain control input 109 under control of controller 120. As such, voltage device 129 can comprise a voltage source and/or a power supply controlled by controller 120.

In implementations depicted in Fig. 1, optical sampling device 113 comprises a PIC optical tap and a photodiode, the PIC optical tap including, but not limited to, a beam splitter, one or more directional couplers in waveguide 111 and the like, and a respective photodiode arranged so that optical signals (e.g. light) from the PIC optical tap illuminate the photodiode and produce an electrical signal which is conveyed to controller 120 for processing.

Hence, optical sampling device 113 samples a portion of an optical signal being conveyed on waveguide 111, for example about 5%, but other percentages are within the scope of present implementations. While optical sampling device 113 reduces an intensity of an optical signal conveyed to APD 103, the sampling of optical sampling device 113 is generally selected so as to not significantly interfere with the optical signal and/or with the functionality of APD 103 to convert the data encoded into the optical signal to an electrical signal.

Optional TEC 130 comprises a device positioned to one or more of control temperature and measure temperature of APD 103, and can comprise a thermoelectric cooler, a digital thermometer, and the like.

As depicted in Fig. 1, device 101 further comprises an optional electrical link 199 between controller 120 and between electrical output 107 such that controller 120 can sample and/or monitor current from electrical output 107.

While not depicted, device 101 further comprises a power source that powers components of device 101, including, but not limited to a connection to a mains power source.

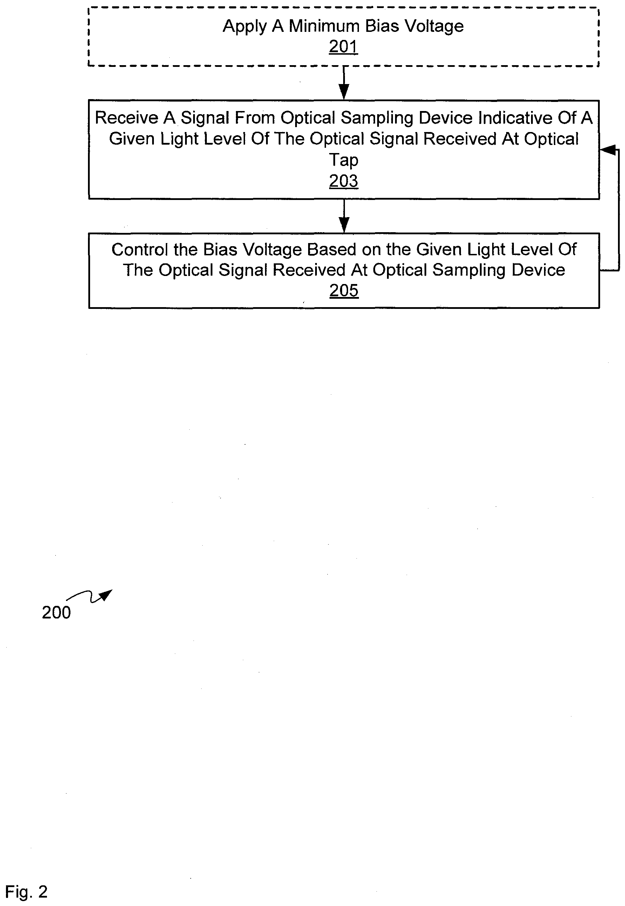

Attention is now directed to Fig. 2 which depicts a flowchart of a method 200 for controlling gain of APD 103, according to non-limiting implementations. In order to assist in the explanation of method 200, it will be assumed that method 200 is performed using device 101, and specifically by controller 120, for example when controller 120 is implementing application 126. Indeed, method 200 is one way in which device 101 and/or controller 120 can be configured. Furthermore, the following discussion of method 200 will lead to a further understanding of device 101 and its various components and/or controller 120. However, it is to be understood that device 101 and/or controller 120 and/or method 200 can be varied, and need not work exactly as discussed herein in conjunction with each other, and that such variations are within the scope of present implementations.

Regardless, it is to be emphasized, that method 200 need not be performed in the exact sequence as shown, unless otherwise indicated; and likewise various blocks may be performed in parallel rather than in sequence; hence the elements of method 200 are referred to herein as "blocks" rather than "steps". It is also to be understood, however, that method 200 can be implemented on variations of system 200 as well.

In some implementations of method 200, memory 122 can store data that relates output at optical sampling device 113 to a bias voltage to be applied to gain control input 109, including, but not limited to, one or more of a response curve and a response table, wherein controller 120 is further configured to control the bias voltage to gain control input 109 of APD 103 based on one or more of the response curve and the response table. For example, data stored at memory 122 can comprise a response curve of APD 103 and/or a table (and the like) of bias voltages to be applied to gain control input 109 to achieve a given electrical response at electrical output 107 when given outputs are received from optical sampling device 113.

In any event, at an optional block 201, controller 120 applies a minimum bias voltage output to gain control input 109. While optional, block 201 can be performed upon start-up of device 101.

At block 203, controller 120 receives a signal from optical sampling device 113 (e.g. from the photodiode of optical sampling device 113) indicative of a given light level of the optical signal received at optical sampling device 113.

At block 205, controller 120 controls the bias voltage to gain control input 109 based on the given light level of the optical signal received at optical sampling device 113 based, for example, on data stored at memory 122 as described above.

Hence, according to method 200 controller 120 is configured to control a bias voltage to gain control input 109 of APD 103 based on the input light level of the optical signal received at optical sampling device 113. For example, to maintain a given output at electrical output 107, controller 120 can: increase the bias voltage when the input light level decreases; and decrease the bias voltage when the input light level increases. In response to the bias voltage changing, APD 103 changes an electrical current at electrical output 107 based on the bias voltage.

While implementations heretofore have been described with reference to the bias voltage being controlled according to a response curve, and the like, of APD 103, in other implementations, bias voltage can be controlled based on characterized parameters of APD 103 and optical sampling device 113.

For example, for a given APD receiver, for example APD 103, an APD gain M is given by:

$$M = \frac{G_s}{\sqrt{I_{apd}}} \qquad \text{Equation} \qquad (1)$$

In Equation 1, Iapd is the APD current (e.g. output at electrical output 107), and Gs is an APD gain scaling factor that is function of an APD circuit and other APD noise parameter, and is generally dependent on the bias voltage; Gs as a function of bias voltage can be determined experimentally and provisioned at memory 122, for example as a factory setting, and the like. In particular, Gs can comprise a gain response curve as a function of bias voltage input to gain control input 109.

Further, a current from the photodiode at optical sampling device 113 can be Itap, the photodiode responsivity of optical sampling device 113 can be $\rho_{tap}$, APD responsivity can be $\rho_{apd}$ and a power coupling ratio of optical sampling device 113 can be $\mu$. Each of $\rho_{tap}$, $\rho_{apd}$ and $\mu$ can be determined experimentally and provisioned at memory 122, for example as a factory setting and the like.

Hence, power from optical sampling device 113 can be expressed as:

$$P_{tap} = I_{tap} / \rho_{tap} \qquad \text{Equation (2)}$$

Further, APD input power can be expressed as:

$$P_{apd} = \frac{I_{tap}}{\rho_{tap} \times \mu} \qquad \text{Equation (3)}$$

The APD gain M can be expressed as:

$$M = \frac{I_{apd}}{\rho_{apd} \times P_{apd}} \qquad \text{Equation (4)}$$

At an optimum APD gain condition, the APD current can be expressed by combining the above equations:

$$I_{apd} = \sqrt[3]{(G_s \times \rho_{apd} \times P_{apd})^2} \qquad \text{Equation (5)}$$

Or

$$I_{apd} = \sqrt[3]{(\frac{G_s \times \rho_{apd} \times I_{tap}}{\rho_{tap} \times \mu})^2} \qquad \text{Equation (6)}$$

Equation (6) is explicitly dependent on the current $I_{tap}$ from the photodiode of optical sampling device 113 and the gain scaling factor Gs, a corresponding explicit APD output current $I_{apd}$ can be determined when the other experimentally determined factors are known and the dependence on Gs with bias voltage is known.

Hence, controller 120 can adjust the bias voltage to gain control input 109 to a desired APD current at electrical output 107 based on monitoring of current from the photodiode of optical sampling device 113.

Furthermore, controller 120 can be configured to limit the bias voltage to a maximum bias voltage and a minimum bias voltage. In particular, a bias voltage of APD 103 can should always keep below a breakdown voltage $V_{br}$, which is temperature dependent and can be expressed as:

$$V_{br}(T) = V_{br}(T_{cal}) + \gamma \times (T - T_{cal})$$ 

**Equation (7)**

In Equation (7), $T_{cal}$ is a calibration temperature at which breakdown voltage $V_{br}(T_{cal})$ is measured, and $\gamma$ is a temperature coefficient. Each of $V_{br}(T_{cal})$, $T_{cal}$, and $\gamma$ can be measured and/or determined experimentally and provisioned at memory 122.

Hence, when TEC 130 is present, and APD 103 is controlled to a given operating temperature, a constant breakdown voltage $V_{br}$ occurs and the bias voltage can be limited to be less than the breakdown voltage $V_{br}$. Alternatively, when TEC 130 merely measures temperature, the breakdown voltage for a present temperature can be determined from Equation (7) and the maximum bias voltage can be adjusted accordingly by controller 120. For example, a maximum bias voltage can be in a range of 80% to 90% of the breakdown voltage.

Alternatively a maximum bias voltage can be determined one or more of experimentally and heuristically and provisioned at memory 122.

Similarly, for very low gain settings, a bandwidth of APD 103 may collapse when the bias voltage is controlled to less than a minimum bias voltage. Hence, controller 120 can also be configured to limit the bias voltage to a minimum bias voltage. The minimum bias voltage can be determined one or more of experimentally and heuristically and provisioned at memory 122.

Hence, in method 200, at block 205, when a bias voltage is determined, for example from Equation (6), and the determined bias voltage is below a maximum bias voltage (determined for example from Equation (7)) or above a minimum bias voltage.

Returning to Fig. 1, an optional electrical link 199 is depicted between controller 120 and electrical output 107 such that controller 120 can sample the current therefrom; while present implementations obviate any need for such monitoring, in some implementations the resulting response of electrical output 107 can be determined when bias voltage is changed to ensure that APD 103 is operating to a given specification (e.g. by determining whether APD 103 is outputting a given current to circuitry 140, as determined from Equation (6) and the like).

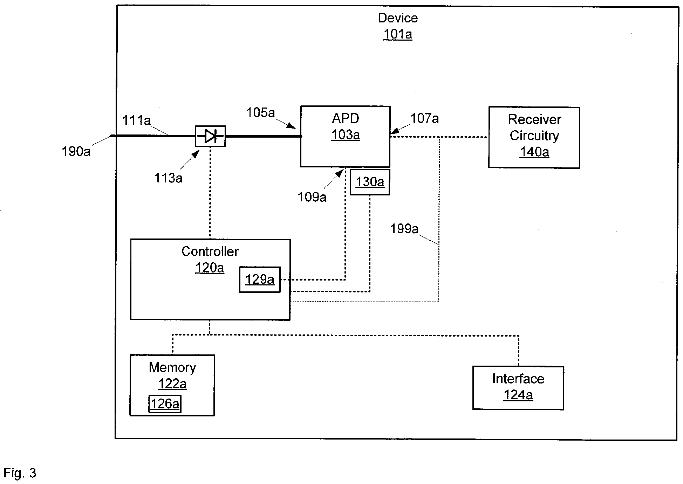

Persons skilled in the art will appreciate that there are yet more alternative implementations and modifications possible. For example, attention is next directed to Fig. 3 which depicts a device 101a that is substantially similar to device 101, with like elements having like numbers, however with an "a" appended thereto.

Hence, device 101a comprises: an avalanche photodiode (APD) 103a comprising a light input 105a, an electrical output 107a and a gain control input 109a; a waveguide 111a configured to convey on optical signal to light input 105a of APD 103a; an optical sampling device 113a on waveguide 111a configured to sample an input light level of the optical signal, waveguide 111a and at least a portion of optical sampling device 113a formed from a photonic integrated circuit (PIC); and, a controller 120a in communication with optical sampling device 113a and gain control input 109a, controller 120a configured to control a bias voltage to gain control input 109a of APD 103a based on the input light level of: the optical signal received at optical sampling device 113a. As depicted, device 101a further comprises a memory 122a and an interface 124a each interconnected with controller 120a. In particular, memory 122a stores an application 126a, which, when processed by controller 120a, enables controller to control the bias voltage. As depicted, controller 120a further comprises a voltage device 129a in communication with gain control input 109a of APD 103a, controller 120a configured to control voltage device 129a to output a bias voltage to gain control input 109a. As depicted, device 101a further comprises an optional temperature measurement device and/or temperature control device and/or thermoelectric cooler 130a (referred to hereafter as TEC 130a) and optional receiver circuitry 140a (interchangeably referred to as circuitry 140a). Device 101a further comprises an input 190a to waveguide 111a. An optional electrical link 199a between controller 120a and between electrical output 107a is also depicted.

Hence device 101a functions similar to device 101, however in device 101a, optical sampling device 113a comprises an in-line photodiode integrated directly onto waveguide 111a, the photodiode configured to sample the input light level of the optical signal on waveguide 111a by absorbing a fraction of the optical signal and transmitting a remainder of the optical signal to APD 103a on waveguide 111a.

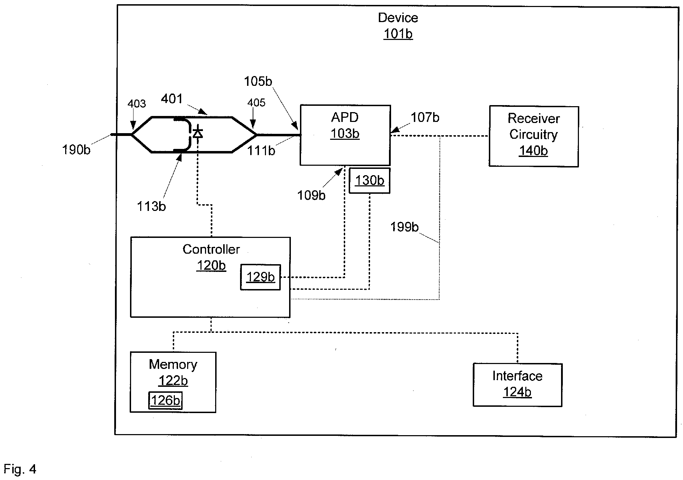

In yet further implementations, other types of components can be integrated into devices described herein. For example, attention is next directed to Fig. 4 which depicts a device 101b that is substantially similar to device 101, with like elements having like numbers, however with a "b" appended thereto.

Hence, device 101b comprises: an avalanche photodiode (APD) 103b comprising a light input 105b, an electrical output 107b and a gain control input 109b; a waveguide 111b configured to convey on optical signal to light input 105b of APD 103b; an optical sampling device 113b on waveguide 111b configured to sample an input light level of the optical signal, waveguide 111b and at least a portion of optical sampling device 113b formed from a photonic integrated circuit (PIC); and, a controller 120b in communication with optical sampling device 113b and gain control input 109b, controller 120b configured to control a bias voltage to gain control input 109b of APD 103b based on the input light level of the optical signal received at optical sampling device 113b. As depicted, device 101b further comprises a memory 122b and an interface 124b each interconnected with controller 120b. In particular, memory 122b stores an application 126b, which, when processed by controller 120b, enables controller to control the bias voltage. As depicted, controller 120b further comprises a voltage device 129b in communication with gain control input 109b of APD 103b, controller 120b configured to control voltage device 129b to output a bias voltage to gain control input 109b. As depicted, device 101b further comprises an optional temperature measurement device and/or temperature control device and/or thermoelectric cooler 130b (referred to hereafter as TEC 130b) and optional receiver circuitry 140b (interchangeably referred to as circuitry 140b). An optional electrical link 199b between controller 120b and between electrical output 107b is also depicted.

However, device 101b further comprises a polarization diverse receiver 401 on waveguide 111b. Device 101b further comprises an input 190b to waveguide 111b and/or polarization diverse receiver 401.

Polarization diverse receiver 401 comprises a polarization splitter 403 located prior to optical sampling device 113b, polarization splitter 403 configured to split an optical signal received from input 190b into two paths (e.g. of two different polarizations). Polarization diverse receiver 401 further comprises a polarization combiner 405 configured to route two paths, and hence respective optical signals from the two paths, into APD 103b (and specifically into optical input 105b) on single bus portion of waveguide 113b. In these implementations, optical sampling device 113b comprises two PIC optical taps, one for each path of polarization diverse receiver 401, and a common photodiode. Hence, the two paths of polarization diverse receiver 401 can comprise a dual bus portion of waveguide 111b. Further, each of polarization diverse receiver 401, waveguide 111b and optical taps on each path can be formed from a common PIC.

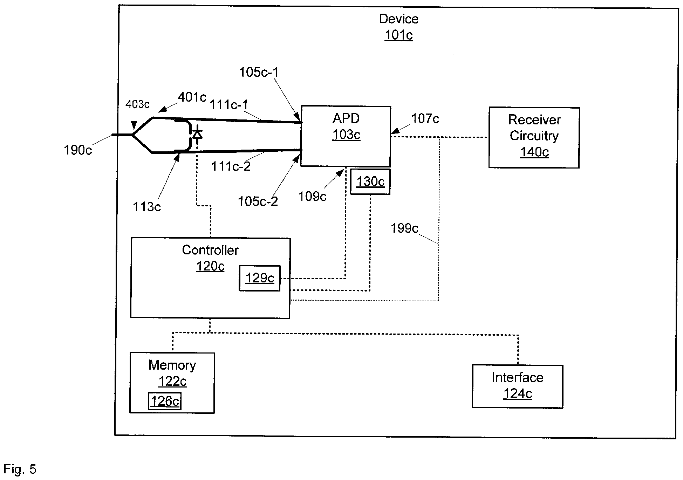

In yet further implementations, other types of polarization diverse receiver can be integrated into devices described herein. For example, attention is next directed to Fig. 5 which depicts a device 101c that is substantially similar to device 101b, with like elements having like numbers, however with a "c" appended thereto rather than a "b".

Hence, device 101c comprises: an avalanche photodiode (APD) 103c comprising a first light input 105c-1, a second light input 105c-2, an electrical output 107c and a gain control input 109c; waveguides 111c-1, 111c-2 configured to convey on optical signal to respective light inputs 105c-1, 105c-2 of APD 103c; an optical sampling device 113c on waveguides 111c-1, 111c-2 configured to sample an input light level of the optical signal, waveguides 111c-1, 111c-2 and at least a portion of optical sampling device 113c formed from a photonic integrated circuit (PIC); and, a controller 120c in communication with optical sampling device 113c and gain control input 109c, controller 120c configured to control a bias voltage to gain control input 109c of APD 103c based on the input light level of the optical signal received at optical sampling device 113c. As depicted, device 101c further comprises a memory 122c and an interface 124c each interconnected with controller 120c. In particular, memory 122c stores an application 126c, which, when processed by controller 120c, enables controller to control the bias voltage. As depicted, controller 120c further comprises a voltage device 129c in communication with gain control input 109c of APD 103c, controller 120c configured to control voltage device 129c to output a bias voltage to gain control input 109c. As depicted, device 101c further comprises an optional temperature measurement device and/or temperature control device and/or thermoelectric cooler 130c (referred to hereafter as TEC 130c) and optional receiver circuitry 140c (interchangeably referred to as circuitry 140c). An optional electrical link 199c between controller 120c and between electrical output 107c is also depicted.

However, device 101c further comprises a polarization diverse receiver 401c on waveguides 111c-1, 111c-2, with device 101c further comprising an input 190c to waveguides 111c-1, 111c-2 and/or polarization diverse receiver 401c.

Polarization diverse receiver 401c comprises a polarization splitter 403c located prior to optical sampling device 113c, polarization splitter 403c configured to split an optical signal received from input 190c into two paths (e.g. of two different polarizations) on each of waveguides 111c-1, 111c-2, which guide respective optical signals to respective optical inputs 105c-1, 105c-2 of APD 103c.

Hence, in contrast to device 101b, device 101c lacks polarization combiner; rather APD 103c comprises two optical inputs 105c-1, 105c-2, one for each of waveguides 111c-1, 111c-2. Like device 101b, the optical sampling device 113c of: device 101c comprises two PIC optical taps, one on each each of waveguides 111c-1, 111c-2, and a common photodiode. Hence, the two waveguides 111c-1, 111c-2 of polarization diverse receiver 401c can comprise a dual bus portion of waveguides 111c-1, 111c-2. Further, each of polarization diverse receiver 401c, waveguides 111c-1, 111c-2 and optical taps on each path can be formed from a common PIC.

Furthermore, on each of devices 101b, 101c, optical sampling devices 113b, 113c could be replaced with one or more in-line photodiodes on each path and/or waveguide prior to a respective APD. By manufacturing at least optical components of device 101, 101a, 101b, 101c using a photonics integrated circuit, an optical sampling device can be cheaply integrated into a waveguide that conveys light to an APD such that a controller can control a bias voltage of the APD based on a response of a photodiode at the optical sampling device. Such a device is easier to manufacture than prior art devices and does not require expensive and lengthy factory calibration routines.

Those skilled in the art will appreciate that in some implementations, the functionality of device 101, 101a, 101b, 101c can be implemented using pre-programmed hardware or firmware elements (e.g., application specific integrated circuits (ASICs), electrically erasable programmable read-only memories (EEPROMs), etc.), or other related components. In other implementations, the functionality of computing device 101, 101a, 101b, 101c can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., radio-frequency (RF), microwave, infrared, free-space optical or other transmission schemes) or a combination thereof.

Persons skilled in the art will appreciate that there are yet more alternative implementations and modifications possible, and that the above examples are only illustrations of one or more implementations. The scope, therefore, is only to be limited by the claims appended hereto.

**Claims**

1. A device (101) comprising:

    an avalanche photodiode (APD (103)) (103) comprising a light input (105), an electrical output (107) and a gain control input (109);
    a waveguide (111) configured to convey on optical signal to the light input (105) of the APD (103);
    an optical sampling device (113) on the waveguide (111) configured to sample an input light level of the optical signal, the waveguide (111) and at least a portion of the optical sampling device (113) formed from a photonic integrated circuit (PIC); and,
    a controller (120) in communication with the optical sampling device (113) and the gain control input (109), the controller (120) configured to control a bias voltage to the gain control input (109) of the APD (103) based on the input light level of the optical signal received at the optical sampling device (113).

2. The device (101) of claim 1, wherein the controller (120) is further configured to: increase the bias voltage when the input light level decreases; and decrease the bias voltage when the input light level increases.

3. The device (101) of any one of claims 1 to 2, wherein the controller (120) is further configured to limit the bias voltage to a maximum bias voltage and a minimum bias voltage.

4. The device (101) of any one of claims 1 to 3, further comprising one or more of a temperature control device (130) and a temperature measurement device located to one or more of control a temperature of the APD (103) and determine a temperature of the APD (103), the controller (120) further configured to: determine a maximum bias voltage based on the temperature; and limit the bias voltage to the maximum bias voltage.

5. The device (101) of any one of claims 1 to 4, wherein the controller (120), the APD (103), the waveguide (111) and the optical sampling device (113) are formed on a silicon chip, and the PIC comprises a silicon PIC.

6. The device (101) of any one of claims 1 to 5, wherein the optical sampling device (113) comprises a photodiode configured to receive a portion of the optical signal on the waveguide (111) and, in response, produce an electrical signal related to the input light level of the optical signal, the controller (120) in communication with the photodiode, and the controller (120) further configured to control the bias voltage based on the electrical signal received from the photodiode.

7. The device (101) of claim 1, wherein the optical sampling device (113) comprises an in-line photodiode integrated directly onto the waveguide (111), the photodiode configured to sample the input light level of the optical signal by absorbing a fraction of the optical signal and transmitting a remainder of the optical signal to the APD (103).

8. The device (101) of any one of claims 1 to 7, further comprising a memory (122) storing one or more of a response curve and a response table, wherein the controller (120) is further configured to control the bias voltage to the gain control input (109) of the APD (103) based on one or more of the response curve and the response table.

9.  The device (101) of any one of claims 1 to 8, further comprising a light input (190) to the waveguide (111), the light input (190) configured to receive the optical signal from an external source.

10. The device (101) of claim 9, wherein the external source comprises an optical fiber.

11. The device (101) of any one of claims 1 to 10, wherein the APD (103) is further configured to change an electrical current at the electrical output (107) based on the bias voltage.

12. The device (101) of any one of claims 1 to 11, further comprising an electrical circuit (140) in communication with the electrical output (107) of the APD (103).

13. The device (101) of claim 12, wherein the electrical circuit is configured to convert electrical signals received from the electrical output (107) into data.

14. The device (101) of any one of claims 1 to 13, further comprising an optical telecommunications receiver.

15. The device (101) of any one of claims 1 to 14, further comprising a polarization diverse receiver (401), one or more paths of the polarization diverse receiver comprising the waveguide (111).

Fig. 1

```
┌ ─ ─ ─ ─ ─ ─ ─ ─ ─ ─ ─ ─ ─ ─ ─ ─ ─ ─ ─ ─ ─ ─ ─ ─ ─ ─ ┐
│              Apply A Minimum Bias Voltage              │
│                        201                            │
└ ─ ─ ─ ─ ─ ─ ─ ─ ─ ─ ─ ─ ─┬─ ─ ─ ─ ─ ─ ─ ─ ─ ─ ─ ─ ─ ┘
```

Receive A Signal From Optical Sampling Device Indicative Of A Given Light Level Of The Optical Signal Received At Optical Tap
203

Control the Bias Voltage Based on the Given Light Level Of The Optical Signal Received At Optical Sampling Device
205

200

Fig. 2

Fig. 3

Fig. 4

Fig. 5

Europäisches
Patentamt

European
Patent Office

Office européen
des brevets

# EUROPEAN SEARCH REPORT

Application Number

EP 16 19 6225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/110105 A1 (KUHARA YOSHIKI [JP] ET AL) 26 May 2005 (2005-05-26) <br> * abstract * <br> * paragraphs [0034] - [0036] * <br> * paragraphs [0061] - [0062] * <br> * figures 1,11 * | 1-15 | INV. <br> H04B10/69 |
| X | US 2011/142393 A1 (EARNSHAW MARK P [US] ET AL) 16 June 2011 (2011-06-16) <br> * paragraphs [0038] - [0040] * <br> * figure 6 * | 1-15 | |
| X | US 2007/248357 A1 (FEDIAKINE NIKOLAI [US] ET AL) 25 October 2007 (2007-10-25) <br> * paragraphs [0020] - [0026] * <br> * figure 1 * | 1-15 | |
| A | WO 03/069379 A2 (FINISAR CORP [US]) 21 August 2003 (2003-08-21) <br> * page 3, line 1 - page 5, line 11 * <br> * figures 4, 8-10 * | 1-15 | |
| A | WO 98/00943 A1 (PACIFIC FIBEROPTICS INC [US]) 8 January 1998 (1998-01-08) <br> * page 3, lines 23-35 * <br> * page 7, line 42 - page 8, line 33 * <br> * page 10, line 32 - page 12, line 28 * <br> * figures 2A, 2B, 4A, 4B, 5 * | 1-15 | TECHNICAL FIELDS SEARCHED (IPC) <br><br> H04B |

The present search report has been drawn up for all claims

| Place of search | Date of completion of the search | Examiner |
|---|---|---|
| Munich | 24 February 2017 | Rolan Cisneros, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 163 773 A1**

## ANNEX TO THE EUROPEAN SEARCH REPORT
## ON EUROPEAN PATENT APPLICATION NO.

EP 16 19 6225

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2017

| Patent document cited in search report | | Publication date | Patent family member(s) | | Publication date |
|---|---|---|---|---|---|
| US 2005110105 | A1 | 26-05-2005 | NONE | | |
| US 2011142393 | A1 | 16-06-2011 | US 2011142393 | A1 | 16-06-2011 |
| | | | US 2013016944 | A1 | 17-01-2013 |
| US 2007248357 | A1 | 25-10-2007 | CN 101711464 | A | 19-05-2010 |
| | | | EP 2145408 | A1 | 20-01-2010 |
| | | | US 2007248357 | A1 | 25-10-2007 |
| | | | WO 2008130979 | A1 | 30-10-2008 |
| WO 03069379 | A2 | 21-08-2003 | AU 2003215192 | A1 | 04-09-2003 |
| | | | EP 1483774 | A2 | 08-12-2004 |
| | | | US 2003210917 | A1 | 13-11-2003 |
| | | | US 2005001152 | A1 | 06-01-2005 |
| | | | US 2005006567 | A1 | 13-01-2005 |
| | | | WO 03069379 | A2 | 21-08-2003 |
| WO 9800943 | A1 | 08-01-1998 | AU 3500697 | A | 21-01-1998 |
| | | | US 5953690 | A | 14-09-1999 |
| | | | WO 9800943 | A1 | 08-01-1998 |

EPO FORM P0459

For more details about this annex : see Official Journal of the European Patent Office, No. 12/82